# EUROPEAN PATENT APPLICATION

(11) **EP 4 365 223 A1**
(43) Date of publication of application: **08.05.2024**
(21) Application number: 22833284.7
(22) Date of filing: 30.06.2022
(51) Int. Cl.: C08J 3/12, C08F 6/00, C08F 14/26

(54) **METHOD FOR PRODUCING POLYTETRAFLUOROETHYLENE PARTICLES**

(30) Priority: 30.06.2021 JP 2021109115
(71) Applicant: DAIKIN INDUSTRIES, LTD., Osaka-Shi, Osaka 530-0001 (JP)
(72) Inventor: TANAKA, Takayuki, Osaka-shi, Osaka 530-0001 (JP); MIYAMOTO, Masayoshi, Osaka-shi, Osaka 530-0001 (JP); MINAMIYAMA, Tomoki, Osaka-shi, Osaka 530-0001 (JP); KUSUNOKI, Takeki, Osaka-shi, Osaka 530-0001 (JP); TAIRA, Takahiro, Osaka-shi, Osaka 530-0001 (JP); YAMABE, Takuya, Osaka-shi, Osaka 530-0001 (JP); YOSHIDA, Hirotoshi, Osaka-shi, Osaka 530-0001 (JP); KATO, Taketo, Osaka-shi, Osaka 530-0001 (JP); YAMANAKA, Taku, Osaka-shi, Osaka 530-0001 (JP); TSUKAMOTO, Mitsuo, Osaka-shi, Osaka 530-0001 (JP)
(74) Representative: Hoffmann Eitle
(86) International application number: PCT/JP2022/026258
(87) International publication number: WO 2023/277138

(57) **Abstract**

Provided is a method for producing a polytetrafluoroethylene particle, comprising subjecting tetrafluoroethylene to suspension polymerization in an aqueous medium to prepare a suspension-polymerized particle of polytetrafluoroethylene, washing and then crushing the suspension-polymerized particle or crushing the suspension-polymerized particle with washing to prepare a crushed particle, dehydrating the crushed particle to prepare a crushed particle having a water content of 40% by mass or less, and subjecting the dehydrated crushed particle to heat treatment to produce a polytetrafluoroethylene particle.

## Description

### TECHNICAL FIELD

The present disclosure relates to a method for producing a polytetrafluoroethylene particle, a method for producing a polytetrafluoroethylene formed article, and a method for producing a polytetrafluoroethylene compression-molded article.

### BACKGROUND ART

A known method for producing polytetrafluoroethylene is an emulsion polymerization method, a suspension polymerization method, or the like.

In an emulsion polymerization method, in general, tetrafluoroethylene is polymerized in an aqueous medium in the presence of a fluorine-containing surfactant to give an aqueous dispersion in which primary particles of polytetrafluoroethylene are stably dispersed in the aqueous medium. The primary particles in the resulting aqueous dispersion are coagulated and dried to give a polytetrafluoroethylene fine powder.

On the other hand, in a suspension polymerization method, in general, tetrafluoroethylene is polymerized in an aqueous medium without any fluorine-containing surfactant or with a small amount of a fluorine-containing surfactant to produce a suspension-polymerized particle. The resulting suspension-polymerized particle is recovered and dried to give a polytetrafluoroethylene molding powder.

For example, Patent Document 1 describes, as a method for producing polytetrafluoroethylene by a suspension polymerization method, a method for producing a polytetrafluoroethylene molding powder, the method comprising a step of subjecting a monomer containing 99.8% by mass or more of tetrafluoroethylene to suspension polymerization in an aqueous medium, to produce a granular polymer particle, and a step of crushing the granular polymer particle, in which the aqueous medium contains a compound represented by the following formula (1) at a concentration of 0.5 to 2000 ppm:

R^{F}(OCF (X¹)CF₂)ₖ₋₁OCF(X²)COO⁻M⁺ (1)

wherein R^{F} is a perfluorinated monovalent organic group having 1 to 10 carbon atoms, X¹ and X² are each independently a fluorine atom or a trifluoromethyl group, k is an integer of 1 or more, and M⁺ is a hydrogen ion, an ammonium ion, an alkyl-substituted ammonium ion or an alkali metal ion.

### RELATED ART

### PATENT DOCUMENTS

Patent Document 1: International Publication No. WO 2014/123075

### SUMMARY OF THE INVENTION

### PROBLEM TO BE SOLVED BY THE INVENTION

An object of the present disclosure is to provide a production method for producing a polytetrafluoroethylene particle having a decreased acid odor.

### MEANS FOR SOLVING THE PROBLEM

The present disclosure provides a method for producing a polytetrafluoroethylene particle, comprising subjecting tetrafluoroethylene to suspension polymerization in an aqueous medium to prepare a suspension-polymerized particle of a polytetrafluoroethylene, washing and then crushing the suspension-polymerized particle or crushing the suspension-polymerized particle with washing to prepare a crushed particle, dehydrating the crushed particle to prepare a crushed particle having a water content of 40% by mass or less, and subjecting the dehydrated crushed particle to heat treatment to produce a polytetrafluoroethylene particle.

In the production method of the present disclosure, it is preferable that after the crushed particle is dehydrated, the crushed particle is further dried.

In the production method of the present disclosure, it is preferable that the crushed particle is dried by airflow drying.

In the production method of the present disclosure, the temperature of the heat treatment is preferably 200°C or higher.

In the production method of the present disclosure, the heat treatment is preferably performed using a conductive heat-receiving type dryer.

In the production method of the present disclosure, the heat treatment is preferably performed using a material-stirring type dryer or a material-conveying type dryer.

In the production method of the present disclosure, it is preferable that, in the heat treatment or during transferring of the polytetrafluoroethylene particle after the heat treatment, the polytetrafluoroethylene particle is produced by forming a solid-gas mixture containing the polytetrafluoroethylene particle generated by the heat treatment and gas, separating the solid-gas mixture into the polytetrafluoroethylene particle and the gas, and recovering the polytetrafluoroethylene particle.

In the production method of the present disclosure, the average particle size of the crushed particle is preferably 100 to 800 µm.

In the production method of the present disclosure, it is preferable that after the polytetrafluoroethylene particle is produced by subjecting the crushed particle to the heat treatment, the polytetrafluoroethylene particle is further crushed to produce a polytetrafluoroethylene particle having an average particle size of 200 µm or less.

In the production method of the present disclosure, tetrafluoroethylene and a modifying monomer are preferably subjected to suspension polymerization.

In the production method of the present disclosure, the standard specific gravity of the polytetrafluoroethylene particle is preferably 2.200 or less.

In the production method of the present disclosure, the specific surface area of the polytetrafluoroethylene particle is preferably 5.0 m²/g or less.

In the production method of the present disclosure, it is preferable that the polytetrafluoroethylene particle is substantially free from a compound represented by the following general formula (2):

General formula (2): [Cₙ₋₁F₂ₙ₋₁COO⁻]M⁺

wherein n represents an integer of 9 to 12 and M⁺ represents a cation.

In the production method of the present disclosure, it is preferable that suspension polymerization is carried out in the presence or absence of a surfactant, and the amount of the surfactant is 2000 mass ppm or less based on the aqueous medium.

The present disclosure also provides a method for producing a polytetrafluoroethylene formed article, the method comprising producing the polytetrafluoroethylene particle by the production method, and then forming the polytetrafluoroethylene particle to give a formed article.

The present disclosure also provides a method for producing a polytetrafluoroethylene compression-molded article, the method comprising producing the polytetrafluoroethylene particle by the production method, and then compression molding the polytetrafluoroethylene particle to give a compression-molded article.

The present disclosure also provides a polytetrafluoroethylene particle obtained by the production method.

### EFFECTS OF INVENTION

The present disclosure can provide a production method for producing a polytetrafluoroethylene particle having a decreased acid odor.

### DESCRIPTION OF EMBODIMENTS

Hereinafter, specific embodiments of the present disclosure will now be described in detail, but the present disclosure is not limited to the following embodiments.

The production method of the present disclosure relates to a method for producing a polytetrafluoroethylene by using a suspension polymerization method.

The production of a polytetrafluoroethylene molding powder by polymerizing tetrafluoroethylene (TFE), as in the production method described in Patent Document 1, has the problem of generating an acid odor from the resulting polytetrafluoroethylene molding powder. The acid odor is a "sour" odor of an acidic substance such as formic acid or acetic acid, and is an odor strongly stimulating the trigeminal nerve.

In the method for producing a polytetrafluoroethylene particle of the present disclosure, a suspension-polymerized particle of polytetrafluoroethylene is prepared by a suspension polymerization method, then the resulting suspension-polymerized particle is crushed and the crushed particle is dehydrated, and the crushed particle is subjected to a heat treatment to produce a polytetrafluoroethylene particle. The method for producing a polytetrafluoroethylene particle of the present disclosure has such a configuration, and thus can produce a polytetrafluoroethylene particle having a decreased acid odor.

Next, each step of the production method of the present disclosure will be described in detail.

### (Polymerization)

In the production method of the present disclosure, first, TFE is subjected to suspension polymerization in an aqueous medium to prepare a suspension-polymerized particle of polytetrafluoroethylene.

The suspension-polymerized particle of polytetrafluoroethylene is obtained by subjecting TFE to suspension polymerization. The suspension-polymerized particle cannot be present in the state of being dispersed in an aqueous medium. On the contrary, when the polytetrafluoroethylene is prepared by subjecting TFE to emulsion polymerization, the polytetrafluoroethylene is obtained in the form of a primary particle (emulsion-polymerized particle) dispersed in an aqueous medium.

The suspension-polymerized particle usually has a larger average particle size than the emulsion-polymerized particle. The average particle size of the suspension-polymerized particle is preferably 200 µm or more, more preferably 400 µm or more, even more preferably 800 µm or more and particularly preferably 1 mm or more, and is preferably 100 mm or less.

The polytetrafluoroethylene obtained by suspension polymerization is preferably a high molecular weight polytetrafluoroethylene that is non melt-processible. The term "non melt-processible" means a property that the melt flow rate cannot be measured at a temperature higher than the crystal melting point in accordance with ASTM D 1238 and D 2116.

The standard specific gravity (SSG) of the polytetrafluoroethylene is preferably 2.130 to 2.280. The standard specific gravity can be measured according to ASTM D4894. In the present disclosure, when the standard specific gravity (SSG) of the polytetrafluoroethylene is within the above range, it is meant that the polytetrafluoroethylene is a high molecular weight polytetrafluoroethylene.

The peak temperature of the polytetrafluoroethylene is preferably 333 to 347°C and more preferably 335 to 347°C. The peak temperature can be specified as the corresponding temperature to the maximum value appearing in a differential thermal (DTA) curve obtained by heating a polytetrafluoroethylene having no history of being heated to a temperature of 300°C or higher, under the condition of 10°C/min with TG/DTA (thermogravimetric - differential thermal analyzer). In the present disclosure, when the peak temperature of the polytetrafluoroethylene is within the above range, it is meant that the polytetrafluoroethylene is a high molecular weight polytetrafluoroethylene.

The polytetrafluoroethylene preferably shows at least one or more endothermic peak appearing in a range of 333 to 347°C on a heat-of-fusion curve obtained by heating a polytetrafluoroethylene having no history of being heated to a temperature of 300°C or higher, at a temperature-increasing rate of 10°C/min with a differential scanning calorimeter [DSC], and has an enthalpy of fusion of 52 mJ/mg or more at 290 to 350°C, calculated from the heat-of-fusion curve. The enthalpy of fusion of the polytetrafluoroethylene is more preferably 55 mJ/mg or more and even more preferably 58 mJ/mg or more.

In the production method of the present disclosure, it is also preferable that TFE and a modifying monomer are subjected to suspension polymerization. That is to say, the polytetrafluoroethylene may be a homopolytetrafluoroethylene containing only TFE unit, or may be a modified polytetrafluoroethylene containing TFE unit and a modifying-monomer unit that is based on a modifying monomer copolymerizable with TFE.

The amount of the modifying monomer added when polymerizing TFE is preferably 0.001% by mass or more, more preferably 0.01% by mass or more, even more preferably 0.03% by mass or more and particularly preferably 0.05% by mass or more, and is preferably 1.0% by mass or less, more preferably 0.8% by mass or less, even more preferably 0.5% by mass or less and particularly preferably 0.3% by mass or less based on the resulting polytetrafluoroethylene.

The modifying monomer is not limited as long as it can be copolymerized with TFE, and examples thereof include a fluoromonomer and a non-fluoromonomer. One modifying monomer may be used singly, or multiple modifying monomers may be used.

The non-fluoromonomer is not limited, and examples thereof include a monomer represented by general formula:

CH₂=CR^{Q1}-LR^{Q2}

wherein R^{Q1} represents a hydrogen atom or an alkyl group; L represents a single bond, -CO-O-*, -O-CO-*, or -O-; * represents a bond position with R^{Q2}; and R^{Q2} represents a hydrogen atom, an alkyl group, or a nitrile group.

Examples of the non-fluoromonomer include methyl acrylate, methyl methacrylate, ethyl acrylate, ethyl methacrylate, propyl acrylate, propyl methacrylate, butyl acrylate, butyl methacrylate, hexyl methacrylate, cyclohexyl methacrylate, vinyl methacrylate, vinyl acetate, acrylic acid, methacrylic acid, acrylonitrile, methacrylonitrile, ethyl vinyl ether, and cyclohexyl vinyl ether. Of these, the non-fluoromonomer is preferably butyl methacrylate, vinyl acetate, or acrylic acid.

Examples of the fluoromonomer include perfluoroolefins such as hexafluoropropylene [HFP]; hydrogen-containing fluoroolefins such as trifluoroethylene and vinylidene fluoride [VDF]; perhaloolefins such as chlorotrifluoroethylene; perfluorovinyl ether; (perfluoroalkyl)ethylene; and perfluoroallyl ether.

The perfluorovinyl ether is not limited, and examples thereof include a perfluoro unsaturated compound represented by general formula (A):

CF₂=CF-ORf (A)

wherein Rf represents a perfluoro organic group. The "perfluoro organic group" as used herein means an organic group in which all hydrogen atoms bonded to the carbon atoms are replaced by fluorine atoms. The perfluoro organic group may have ether oxygen.

An example of the perfluorovinyl ether is a perfluoro(alkyl vinyl ether) [PAVE] in which Rf in general formula (A) is a perfluoroalkyl group having 1 to 10 carbon atoms. The perfluoroalkyl group preferably has 1 to 5 carbon atoms.

Examples of the perfluoroalkyl group in the PAVE include a perfluoromethyl group, a perfluoroethyl group, a perfluoropropyl group, a perfluorobutyl group, a perfluoropentyl group, and a perfluorohexyl group.

Examples of the perfluoro vinyl ether also include those represented by general formula (A) in which Rf is a perfluoro(alkoxyalkyl) group having 4 to 9 carbon atoms; those in which Rf is a group represented by the following formula: 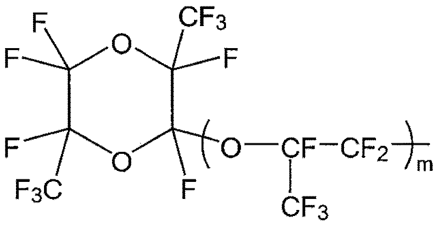 wherein m represents an integer of 0 or 1 to 4; and those in which Rf is a group represented by the following formula:

CF₃CF₂CF₂-(O-CF(CF₃)-CF₂)ₙ-

wherein n represents an integer of 1 to 4.

Examples of the hydrogen-containing fluoroolefin include CH₂=CF₂, CHF=CH₂, CHF=CF₂, CH₂=CFCF₃, CH₂=CHCF₃, CHF=CHCF₃ (E isomer), and CHF=CHCF₃ (Z isomer).

The (perfluoroalkyl)ethylene (PFAE) is not limited, and examples thereof include (perfluorobutyl)ethylene (PFBE) and (perfluorohexyl)ethylene.

Examples of the perfluoroallyl ether include a fluoromonomer represented by:

General formula: CF₂=CF-CF₂-ORf

wherein Rf represents a perfluoro organic group.

Rf in the general formula is the same as Rf in general formula (A). Rf is preferably a perfluoroalkyl group having 1 to 10 carbon atoms or a perfluoroalkoxyalkyl group having 1 to 10 carbon atoms. The perfluoroallyl ether is preferably at least one selected from the group consisting of CF₂=CF-CF₂-O-CF₃, CF₂=CF-CF₂-O-C₂F₅, CF₂=CF-CF₂-O-C₃F₇, and CF₂=CF-CF₂-O-C₄F₉, more preferably at least one selected from the group consisting of CF₂=CF-CF₂-O-C₂F₅, CF₂=CF-CF₂-O-C₃F₇, and CF₂=CF-CF₂-O-C₄F₉, and even more preferably CF₂=CF-CF₂-O-CF₂CF₂CF₃.

The modifying monomer is preferably at least one selected from the group consisting of hexafluoropropylene, chlorotrifluoroethylene, vinylidene fluoride, perfluoro(alkyl vinyl ether), (perfluoroalkyl)ethylene, and ethylene, and more preferably a perfluoro(alkyl vinyl ether).

From the viewpoint of reactivity with TFE, the modifying monomer is preferably at least one selected from the group consisting of hexafluoropropylene, perfluoro(alkyl vinyl ether), and (perfluoroalkyl)ethylene, more preferably at least one selected from the group consisting of hexafluoropropylene, perfluoro(methyl vinyl ether), perfluoro(propyl vinyl ether), (perfluorobutyl)ethylene, (perfluorohexyl)ethylene, and (perfluorooctyl)ethylene, and even more preferably at least one selected from the group consisting of perfluoro(methyl vinyl ether) and perfluoro(propyl vinyl ether).

The suspension polymerization can be performed, for example, by charging a reactor with monomers such as TFE, an aqueous medium, and optionally other additives, stirring the contents of the reactor, retaining the reactor at a predetermined polymerization temperature, and then adding a predetermined amount of a polymerization initiator to initiate the polymerization reaction. After the polymerization reaction is initiated, the monomers such as TFE, the polymerization initiator, and a chain transfer agent may be further added depending on the purpose.

The suspension polymerization can be carried out in the presence of a polymerization initiator. The polymerization initiator is not limited as long as it is a polymerization initiator capable of generating radicals within the polymerization temperature range, and known oil-soluble and/or water-soluble polymerization initiators can be used. The polymerization initiator can also be combined with a reducing agent or the like to form a redox agent and initiate polymerization. The concentration of the polymerization initiator is suitably determined according to the type of monomer, the molecular weight of the target polytetrafluoroethylene, and the reaction rate.

The polymerization initiator may be a water-soluble radical polymerization initiator.

Examples of the water-soluble radical polymerization initiator include ionic radical initiators, for example, persulfates such as ammonium persulfate, potassium persulfate, and alkali metal persulfates, and permanganate. Such a radical polymerization initiator can also be used as an acidic component and combined with a reducible component such as hydrazine, diimine, iron(II) sulfate, copper(II) sulfate, oxalates, sulfites, or the like to form an oxidation-reduction type initiator. A compound capable of forming a hydrate of iron(II) sulfate, copper(II) sulfate, or the like may be an anhydride or a hydrate.

Examples of the oxidation-reduction type initiator include ammonium persulfate/copper(II) sulfate, ammonium persulfate/iron(II) sulfate, ammonium persulfate/sodium sulfite/iron(II) sulfate, ammonium persulfate/azodicarbonamide/copper(II) sulfate, ammonium persulfate/sodium azodicarboxylate/copper(II) sulfate, ammonium carbamate/copper(II) sulfate, ammonium persulfate/ammonium carbamate/copper(II) sulfate, and potassium permanganate/ammonium oxalate.

In the case of such a combination of these oxidation-reduction type initiators, it is preferable that any one may be introduced into a polymerization tank in advance, and then the other may be added intermittently or continuously with polymerization being performed.

The amount of the radical polymerization initiator used is adjusted so as to enable the reaction rate to be favorably controlled. For example, in the case of ammonium persulfate, the amount is preferably 1 to 100 ppm, more preferably 1 to 50 ppm, and most preferably 1 to 10 ppm based on the aqueous medium.

The suspension polymerization is carried out by polymerizing TFE in an aqueous medium under stirring. The aqueous medium means a liquid containing water. The aqueous medium is not limited as long as it contains water.

The suspension polymerization can be carried out in the presence or absence of a surfactant. The amount of the surfactant is preferably 2000 mass ppm or less, more preferably 1000 mass ppm or less, even more preferably 500 mass ppm or less, particularly preferably 200 mass ppm or less, and most preferably 100 mass ppm or less based on the aqueous medium. The amount of the surfactant may be 0 mass ppm.

The surfactant for use in the suspension polymerization is preferably a fluorine-containing surfactant. Examples of the fluorine-containing surfactant include anionic fluorine-containing surfactants. The anionic fluorine-containing surfactant may be, for example, a fluorine atomcontaining surfactant having 20 or fewer carbon atoms in total in the portion excluding the anionic group.

The fluorine-containing surfactant may also be a fluorine-containing surfactant in which the molecular weight of the anionic moiety is 1,000 or less, preferably 800 or less. The "anionic moiety" means a portion of the fluorine-containing surfactant excluding the cation. For example, in the case of F(CF₂)ₙ₁COOM represented by the formula (I) below, the anionic moiety is the "F(CF₂)ₙ₁COO" portion.

Examples of the fluorine-containing surfactant also include fluorine-containing surfactants having a LogPOW of 3.5 or less. The LogPOW of the fluorine-containing surfactant is preferably 3.4 or less. The LogPOW is a partition coefficient between 1-octanol and water, and is represented by LogP, wherein P represents a ratio of the fluorine-containing surfactant concentration in octanol/the fluorine-containing surfactant concentration in water attained when an octanol/water (1:1) mixture containing the fluorine-containing surfactant is phaseseparated.

The LogPOW is calculated by performing HPLC on standard substances (heptanoic acid, octanoic acid, nonanoic acid, and decanoic acid) having a known octanol/water partition coefficient under conditions having column: TOSOH ODS-120T column (ϕ4.6 mm × 250 mm, manufactured by Tosoh Corporation), eluent: acetonitrile/0.6% by mass HClO₄ solution = 1/1 (vol/vol%), flow rate: 1.0 ml/min, sample volume: 300 µL, column temperature: 40°C, detection light: UV210 nm to construct a calibration curve concerning each elution time and known octanol/water partition coefficient, and determining the HPLC elution time of a sample liquid based on the calibration curve.

Specific examples of the fluorine-containing surfactant include those described in U.S. Patent Application Publication No. 2007/0015864, U.S. Patent Application Publication No. 2007/0015865, U.S. Patent Application Publication No. 2007/0015866, U.S. Patent Application Publication No. 2007/0276103, U.S. Patent Application Publication No. 2007/0117914, U.S. Patent Application Publication No. 2007/142541, U.S. Patent Application Publication No. 2008/0015319, U.S. Patent No. 3250808, U.S. Patent No. 3271341, Japanese Patent Laid-Open No. 2003-119204, International Publication No. WO 2005/042593, International Publication No. WO 2008/060461, International Publication No. WO 2007/046377, Japanese Patent Laid-Open No. 2007-119526, International Publication No. WO 2007/046482, International Publication No. WO 2007/046345, U.S. Patent Application Publication No. 2014/0228531, International Publication No. WO 2013/189824, and International Publication No. WO 2013/189826.

The anionic fluorine-containing surfactant may be a compound represented by the following general formula (N⁰):

Xⁿ⁰-Rfⁿ⁰-Y⁰ (N⁰)

wherein Xⁿ⁰ is H, Cl, or F; Rfⁿ⁰ is a linear, branched, or cyclic alkylene group having 3 to 20 carbon atoms in which some or all of H are replaced by F, the alkylene group optionally containing one or more ether bonds in which some of H are optionally replaced by Cl; and Y° is an anionic group.

The anionic group Y° may be -COOM, -SO₂M, or -SO₃M, and may be -COOM or -SO₃M.

M is H, a metal atom, NR⁷₄, optionally substituted imidazolium, optionally substituted pyridinium, or optionally substituted phosphonium, and R⁷ is H or an organic group.

Examples of the metal atom include alkali metals (Group 1) and alkaline earth metals (Group 2), such as Na, K, or Li.

R⁷ may be H or a C₁₋₁₀ organic group, may be H or a C₁₋₄ organic group, and may be H or a C₁₋₄ alkyl group.

M may be H, a metal atom, or NR⁷₄, may be H, an alkali metal (Group 1), an alkaline earth metal (Group 2), or NR⁷₄, and may be H, Na, K, Li, or NH₄.

In the Rfⁿ⁰, 50% or more of H atoms may be replaced by fluorine atoms.

Examples of the compound represented by the general formula (N⁰) include a compound represented by the following general formula (N¹):

Xⁿ⁰-(CF₂)ₘ₁-Y⁰ (N¹)

(wherein Xⁿ⁰ is H, Cl, or F, m1 is an integer of 3 to 15, and Y⁰ is as defined above); a compound represented by the following general formula (N²):

Rfⁿ¹-O-(CF(CF₃)CF₂O)ₘ₂CFXⁿ¹-Y⁰ (N²)

(wherein Rfⁿ¹ is a perfluoroalkyl group having 1 to 5 carbon atoms, m2 is an integer of 0 to 3, Xⁿ¹ is F or CF₃, and Y⁰ is as defined above); a compound represented by the following general formula (N³):

Rfⁿ²(CH₂)ₘ₃-(Rfⁿ³)_{q}-Y⁰ (N³)

(wherein Rfⁿ² is a partially or fully fluorinated alkyl group having 1 to 13 carbon atoms and optionally containing an ether bond and/or a chlorine atom, m3 is an integer of 1 to 3, Rfⁿ³ is a linear or branched perfluoroalkylene group having 1 to 3 carbon atoms, q is 0 or 1, and Y° is as defined above); a compound represented by the following general formula (N⁴):

Rfⁿ⁴-O-(CYⁿ¹Yⁿ²)ₚCF₂-Y⁰ (N⁴)

(wherein Rfⁿ⁴ is a linear or branched, partially or fully fluorinated alkyl group having 1 to 12 carbon atoms and optionally containing an ether bond, Yⁿ¹ and Yⁿ² are the same or different and are each independently H or F, p is 0 or 1, and Y° is as defined above); and a compound represented by the following general formula (N⁵): 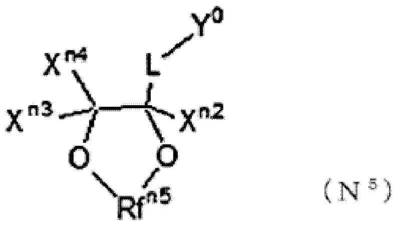 (wherein Xⁿ², Xⁿ³, and Xⁿ⁴ may be the same or different and are each independently H, F, or a linear or branched, partially or fully fluorinated alkyl group having 1 to 6 carbon atoms and optionally containing an ether bond, Rfⁿ⁵ is a linear or branched, partially or fully fluorinated alkylene group having 1 to 3 carbon atoms and optionally containing an ether bond, L is a linking group, and Y° is as defined above, provided that the total number of carbon atoms of Xⁿ², Xⁿ³, Xⁿ⁴, and Rfⁿ⁵ is 18 or less) .

More specific examples of the compound represented by the above general formula (N⁰) include a perfluorocarboxylic acid (I) represented by the following general formula (I), an ω-H perfluorocarboxylic acid (II) represented by the following general formula (II), a perfluoroethercarboxylic acid (III) represented by the following general formula (III), a perfluoroalkylalkylenecarboxylic acid (IV) represented by the following general formula (IV), a perfluoroalkoxyfluorocarboxylic acid (V) represented by the following general formula (V), a perfluoroalkylsulfonic acid (VI) represented by the following general formula (VI), an ω-H perfluorosulfonic acid (VII) represented by the following general formula (VII), a perfluoroalkylalkylene sulfonic acid (VIII) represented by the following general formula (VIII), an alkylalkylene carboxylic acid (IX) represented by the following general formula (IX), a fluorocarboxylic acid (X) represented by the following general formula (X), an alkoxyfluorosulfonic acid (XI) represented by the following general formula (XI), a compound (XII) represented by the following general formula (XII), and a compound (XIII) represented by the following general formula (XIII).

The perfluorocarboxylic acid (I) is represented by the following general formula (I):

F(CF₂)ₙ₁COOM (I)

wherein n1 is an integer of 3 to 14, M is H, a metal atom, NR⁷₄, optionally substituted imidazolium, optionally substituted pyridinium, or optionally substituted phosphonium, and R⁷ is H or an organic group.

The ω-H perfluorocarboxylic acid (II) is represented by the following general formula (II):

H(CF₂)ₙ₂COOM (II)

wherein n2 is an integer of 4 to 15, and M is as defined above.

The perfluoroethercarboxylic acid (III) is represented by the following general formula (III):

Rf¹-O-(CF(CF₃)CF₂O)ₙ₃CF(CF₃)COOM (III)

wherein Rf¹ is a perfluoroalkyl group having 1 to 5 carbon atoms, n3 is an integer of 0 to 3, and M is as defined above.

The perfluoroalkylalkylenecarboxylic acid (IV) is represented by the following general formula (IV):

Rf²(CH₂)ₙ₄Rf³COOM (IV)

wherein Rf² is a perfluoroalkyl group having 1 to 5 carbon atoms, Rf³ is a linear or branched perfluoroalkylene group having 1 to 3 carbon atoms, n4 is an integer of 1 to 3, and M is as defined above.

The alkoxyfluorocarboxylic acid (V) is represented by the following general formula (V):

Rf⁴-O-CY¹Y²CF₂-COOM (V)

wherein Rf⁴ is a linear or branched, partially or fully fluorinated alkyl group having 1 to 12 carbon atoms and optionally containing an ether bond and/or a chlorine atom; Y¹ and Y² are the same or different and are each independently H or F; and M is as defined above.

The perfluoroalkylsulfonic acid (VI) is represented by the following general formula (VI):

F(CF₂)ₙ₅SO₃M (VI)

wherein n5 is an integer of 3 to 14, and M is as defined above.

The ω-H perfluorosulfonic acid (VII) is represented by the following general formula (VII):

H(CF₂)ₙ₆SO₃M (VII)

wherein n6 is an integer of 4 to 14, and M is as defined above.

The perfluoroalkylalkylenesulfonic acid (VIII) is represented by the following general formula (VIII):

Rf⁵(CH₂)ₙ₇SO₃M (VIII)

wherein Rf⁵ is a perfluoroalkyl group having 1 to 13 carbon atoms, n7 is an integer of 1 to 3, and M is as defined above.

The alkylalkylenecarboxylic acid (IX) is represented by the following general formula (IX):

Rf⁶(CH₂)ₙ₈COOM (IX)

wherein Rf⁶ is a linear or branched, partially or fully fluorinated alkyl group having 1 to 13 carbon atoms and optionally containing an ether bond, n8 is an integer of 1 to 3, and M is as defined above.

The fluorocarboxylic acid (X) is represented by the following general formula (X):

Rf⁷-O-Rf⁸-O-CF₂-COOM (X)

wherein Rf⁷ is a linear or branched, partially or fully fluorinated alkyl group having 1 to 6 carbon atoms and optionally containing an ether bond and/or a chlorine atom; Rf⁸ is a linear or branched, partially or fully fluorinated alkyl group having 1 to 6 carbon atoms; and M is as defined above.

The alkoxyfluorosulfonic acid (XI) is represented by the following general formula (XI):

Rf⁹-O-CY¹Y²CF₂-SO₃M (XI)

wherein Rf⁹ is a linear or branched, partially or fully fluorinated alkyl group having 1 to 12 carbon atoms and optionally containing an ether bond and optionally containing chlorine; Y¹ and Y² are the same or different and are each independently H or F; and M is as defined above.

The compound (XII) is represented by the following general formula (XII): 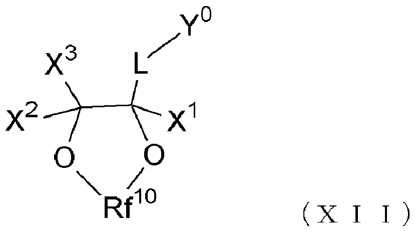 wherein X¹, X², and X³ may be the same or different and are each independently H, F, or a linear or branched, partially or fully fluorinated alkyl group having 1 to 6 carbon atoms and optionally containing an ether bond; Rf¹⁰ is a perfluoroalkylene group having 1 to 3 carbon atoms; L is a linking group; and Y° is an anionic group.

Y° may be -COOM, -SO₂M, or -SO₃M, and may be -SO₃M or COOM, wherein M is as defined above.

Examples of L include a single bond, and a partially or fully fluorinated alkylene group having 1 to 10 carbon atoms and optionally containing an ether bond.

The compound (XIII) is represented by the following general formula (XIII):

Rf²¹-O-(CF₂CF(CF₃)O)ₙ₉(CF₂O)ₙ₁₀CF₂COOM (XIII)

wherein Rf¹¹ is a fluoroalkyl group having 1 to 5 carbon atoms containing chlorine, n9 is an integer of 0 to 3, n10 is an integer of 0 to 3, and M is as defined above. Examples of the compound (XIII) include CF₂Cl0(CF₂CF(CF₃)O)ₙ₉(CF₂O)ₙ₁₀CF₂COONH₄ (a mixture having an average molecular weight of 750, n9 and n10 in the formula are defined above).

Thus, examples of the anionic fluorine-containing surfactant include a carboxylic acid-based surfactant and a sulfonic acid-based surfactant.

The fluorine-containing surfactant may be one fluorine-containing surfactant, or may be a mixture containing two or more fluorine-containing surfactants.

Examples of the fluorine-containing surfactant include compounds represented by the following formulae. The fluorine-containing surfactant may be a mixture of these compounds.

F(CF₂)₇COOM,

F(CF₂)₅COOM,

H(CF₂)₆COOM,

H(CF₂)₇COOM,

CF₃O(CF₂)₃OCHFCF₂COOM,

C₃F₇OCF(CF₃)CF₂OCF(CF₃)COOM,

CF₃CF₂CF₂OCF(CF₃)COOM,

CF₃CF₂OCF₂CF₂OCF₂COOM,

C₂F₅OCF(CF₃)CF₂OCF(CF₃)COOM,

CF₃OCF(CF₃)CF₂OCF(CF₃)COOM,

CF₂ClCF₂CF₂OCF(CF₃)CF₂OCF₂COOM,

CF₂ClCF₂CF₂OCF₂CF(CF₃)OCF₂COOM,

CF₂ClCF(CF₃)OCF (CF₃)CF₂OCF₂COOM,

and

CF₂ClCF(CF₃)OCF₂CF(CF₃)OCF₂COOM,

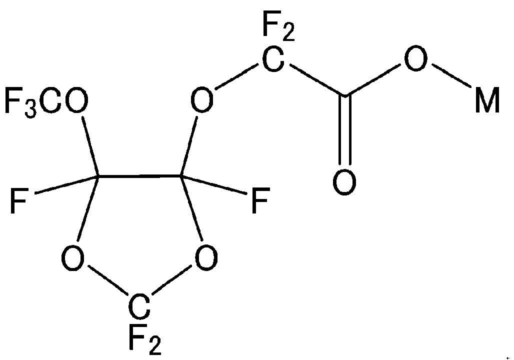

wherein M is H, a metal atom, NR⁷₄, optionally substituted imidazolium, optionally substituted pyridinium, or optionally substituted phosphonium. R⁷ is H or an organic group.

The suspension-polymerized particle obtained by suspension polymerization performed in the presence of the fluorine-containing surfactant usually contains, other than the polytetrafluoroethylene, the fluorine-containing surfactant. Also, the suspension-polymerized particle obtained by polymerizing the monomers such as TFE and the modifying monomer may contain, other than the polytetrafluoroethylene, a fluorine-containing compound produced by polymerizing the monomers. In the present disclosure, the fluorine-containing compound is a compound that is not added during suspension polymerization, such as a compound having a structure similar to that of the fluorine-containing surfactant but having a different number of carbon atoms.

The production method of the present disclosure is capable of producing a polytetrafluoroethylene particle in which the content of the fluorine-containing compound produced by polymerizing the monomers is reduced. The production method of the present disclosure is capable of producing a polytetrafluoroethylene particle in which the content of the fluorine-containing surfactant is reduced even when the suspension polymerization is carried out in the presence of the fluorine-containing surfactant.

A typical compound as the fluorine-containing compound in the suspension-polymerized particle is a fluorine-containing compound having a hydrophilic group, having a molecular weight of 1000 or less, preferably 800 g/mol or less. The production method of the present disclosure is capable of producing a polytetrafluoroethylene particle in which the content of a fluorine-containing compound having a hydrophilic group, having a molecular weight of 1000 or less, preferably 800 g/mol or less in the suspension-polymerized particle obtained by polymerizing the monomers such as TFE, is reduced.

The hydrophilic group in the fluorine-containing compound is preferably an anionic group such as an acid group, and examples thereof include -NH₂, -PO₃M, -OPO₃M, -SO₃M, -OSO₃M, and -COOM (wherein M represents a cation). Of these, the hydrophilic group is preferably -SO₃M or -COOM, and more preferably -COOM.

The suspension-polymerized particle in one embodiment contains, as the fluorine-containing compound having the hydrophilic group, a compound represented by the following general formula (1):

General formula (1): [X-Rf-A⁻]ᵢMⁱ⁺

wherein X represents H, Cl, Br, F or I; Rf represents a linear or branched, partially fluorinated or fully fluorinated aliphatic group, or a linear or branched, partially fluorinated or fully fluorinated aliphatic group interrupted by at least one oxygen atom; A⁻ represents an acid group; Mⁱ⁺ represents a cation having a valence of i; and i represents an integer of 1 to 3.

The suspension-polymerized particle in one embodiment contains, as the fluorine-containing compound having the hydrophilic group, a compound represented by the following general formula (2):

General formula (2): [Cₙ₋₁F₂ₙ₋₁COO⁻]M⁺

wherein n represents an integer of 9 to 12 and M⁺ represents a cation.

The compound (perfluoroalkanoic acid) represented by general formula (2) is known to be formed during polymerization when perfluoroalkyl vinyl ether or the like is used as a modifying monomer (see International Publication No. WO 2019/161153) .

The suspension-polymerized particle in one embodiment contains, as the fluorine-containing compound having the hydrophilic group, a compound represented by the following general formula (3):

General formula (3): [R¹-O-L-CO₂⁻]M⁺

wherein R¹ represents a linear or branched, partially fluorinated or fully fluorinated aliphatic group, or a linear or branched, partially fluorinated or fully fluorinated aliphatic group interrupted by at least one oxygen atom; L represents a linear or branched non-fluorinated, partially fluorinated or fully fluorinated alkylene group; and M⁺ represents a cation.

The suspension-polymerized particle in one embodiment contains, as the fluorine-containing compound having the hydrophilic group, a compound represented by general formula (4) :

General formula (4): [H-(CF₂)ₘCO₂⁻]M⁺

wherein m represents an integer of 3 to 19 and M⁺ represents a cation.

### (Crushing)

In the production method of the present disclosure, next, a crushed particle is prepared by washing and then crushing the resulting suspension-polymerized particle, or crushing the resulting suspension-polymerized particle with washing the particle.

The suspension-polymerized particle obtained by suspension polymerization is usually obtained in a wet form. In the production method of the present disclosure, the suspension-polymerized particle in a wet form may be crushed, or the suspension-polymerized particle in a wet form may be dried and then crushed. The crushing may be wet crushing or dry crushing.

Examples of the method for crushing the suspension-polymerized particle include a crushing method with a crusher. Examples of the crusher include impact type crushers such as a hammer mill, a pin mill, a high-speed rotation mill, and a jet mill, and grinding type crushers for crushing due to the shear force generated by a rotary blade and a peripheral stator (stationary knife), such as a cutter mill, a feather mill, and a colloid mill. A combination of a plurality of crushing devices may be used in crushing.

The temperature at which crushing treatment is carried out is preferably -200 to 50°C, more preferably 1°C or higher, more preferably 40°C or lower, and even more preferably 30°C or lower.

Examples of the method for crushing the suspension-polymerized particle with washing the particle include a method involving crushing the suspension-polymerized particle in water or an organic solvent. For example, water or an organic solvent and the suspension-polymerized particle may be simultaneously fed to a grinding type crusher such as a cutter mill to crush the suspension-polymerized particle, or water or an organic solvent and the suspension-polymerized particle may be mixed in advance and the mixture may be fed to the crusher to crush the suspension-polymerized particle.

The suspension-polymerized particle may be washed before the suspension-polymerized particle is crushed. Water or an organic solvent can be used for washing the suspension-polymerized particle. The washing may be carried out once or multiple times.

Examples of the organic solvent used in such washing include ether, halogenated hydrocarbon, aromatic hydrocarbon, pyridine, nitrile, a nitrogen-containing polar organic compound, dimethylsulfoxide, and alcohol.

The crushing may be carried out once or may be repeatedly carried out until a crushed particle having a desired average particle size or a desired particle size distribution can be prepared.

The crushed particle obtained by crushing is usually obtained in a wet form. The water content in the crushed particle after crushing and before dehydration is, for example, more than 40% by mass. In the production method of the present disclosure, a wet crushed particle is dehydrated, and subjected to heat treatment described below. Examples of the method for dehydrating the wet crushed particle include a dehydration method with a dehydrator. Examples of the dehydrator include a vibrating dehydrator, a filtering dehydrator, and a centrifugal dehydrator. The dehydration is preferably performed at lower than 50°C. The dehydration temperature is the temperature of the atmosphere around the crushed particle.

The wet crushed particle is dehydrated and further dried, and then may be subjected to heat treatment described below. The drying is carried out for removal of water from the crushed particle obtained by crushing. Examples of the method for drying the wet crushed particle include a drying method with a dryer.

Examples of the dryer include a hot air heat-receiving type dryer, a conductive heat-receiving type dryer, a radiation heat-transfer type dryer, and a high-frequency heat-transfer type dryer. Examples of the dryer include a material-standing type dryer, a material-transfer type dryer, a material-stirring type dryer, and a material-conveying type dryer.

Examples of material-standing type dryer and material-transfer type dryer which are of hot air heat-receiving type include a box type dryer, a tunnel dryer, a band dryer, a turbo vertical dryer, a vertical dryer, and a belt dryer.

Examples of the material-stirring type dryer which is of hot air heat-receiving type include a fluidized bed dryer, a draft rotary dryer, a ditch type stirring dryer, and a multistage disk dryer.

Examples of the material-conveying type dryer which is of hot air heat-receiving type include an airflow dryer and a spraying dryer (jet dryer, spray dryer).

Examples of the material-standing type dryer and the material-transfer type dryer which are of conductive heat-receiving type include a vacuum box type dryer, a cylindrical dryer, a vibrating dryer, a vacuum heat treatment dryer, a freeze dryer, and a drum dryer.

Examples of the material-stirring type dryer which is of conductive heat-receiving type include a cylinder type dryer, a ditch type dryer, an inverse-cone type dryer, an extrusion dryer, and a steam heating tube bundle rotation dryer.

Examples of the material-standing type dryer and the material-transfer type dryer which are of radiation heat-transfer type include an infrared dryer and a superheated steam dryer.

Examples of the material-standing type dryer and the material-transfer type dryer which are of high-frequency heat-transfer type include a high-frequency dryer and a microwave dryer.

In one embodiment of the production method of the present disclosure, the crushed particle is dried by airflow drying. The airflow drying can be carried out using an airflow dryer.

After the crushed particle is dried by the airflow drying, a solid-gas mixture containing the crushed particle dried and gas may be separated into the crushed particle and the gas by using a cyclone or the like to recover the crushed particle.

The temperature for drying the crushed particle is preferably lower than 300°C, more preferably 280°C or lower, even more preferably 250°C or lower, yet even more preferably lower than 200°C, particularly preferably lower than 180°C and most preferably lower than 160°C, and is preferably 50°C or higher and more preferably 100°C or higher. The drying temperature is the temperature of the atmosphere around the crushed particle, and can be specified by measuring the temperature of hot air in the case of use of hot air in drying. The temperature of hot air can be measured at a feed port through which hot air is fed to the dryer or an exhaust port through which hot air is exhausted from the dryer, and is preferably measured at the exhaust port.

The water content in the crushed particle is preferably 40% by mass or less, more preferably 20% by mass or less, and even more preferably 10% by mass or less, and the lower limit is not limited, and may be 0.01% by mass or more. The water content in the crushed particle can be adjusted by, for example, dehydrating or drying the crushed particle. The water content in the crushed particle can be determined by, for example, heating and thus sufficiently drying the crushed particle at 150°C for 3 hours, measuring the mass of the crushed particle before and after heating, and performing calculation according to the following expression. Water content (% by mass) = [(Mass (g) of crushed particle before heating) - ((Mass (g) of crushed particle after heating)] / (Mass (g) of crushed particle after heating) × 100

After the suspension-polymerized particle is crushed, the resulting crushed particle may be classified by a known method such as airflow classification. The classification can remove any fine particle having a very small particle size and any coarse particle having a very large particle size, to give a crushed particle having a desired average particle size or a desired particle size distribution.

The average particle size of the crushed particle is preferably 800 µm or less, more preferably 600 µm or less and even more preferably 400 µm or less, and is preferably 1 µm or more, more preferably 5 µm or more, even more preferably 10 µm or more, yet even more preferably 100 µm or more, particularly preferably 150 µm or more and most preferably more 200 µm.

### (Heat treatment)

In the production method of the present disclosure, next, a polytetrafluoroethylene particle is produced by subjecting the resulting crushed particle to heat treatment. The heat treatment is carried out for removal of an acid odor from the crushed particle obtained by crushing.

The heat treatment of the crushed particle may be batch type heat treatment or continuous heat treatment.

The temperature of the heat treatment is preferably 160°C or higher, more preferably 180°C or higher and even more preferably 200°C or higher, and is preferably 340°C or lower, more preferably 310°C or lower and even more preferably 300°C or lower.

The heat treatment time is preferably 1 second or more, more preferably 2 seconds or more, even more preferably 1 minute or more and particularly preferably 3 minutes or more, and is preferably 24 hours or less, more preferably 2 hours or less and even more preferably 1 hour or less.

The heat treatment can be performed, for example, in air or in an inert gas. The heat treatment can be performed, for example, in a gas not containing any active gas such as fluorine gas. The heat treatment can be performed under normal pressure or reduced pressure.

The heat treatment can be carried out using a dryer.

Examples of the dryer include a hot air heat-receiving type dryer, a conductive heat-receiving type dryer, a radiation heat-receiving type dryer, and a high-frequency heat-receiving type dryer. Examples of the dryer include a material-standing type dryer, a material-transfer type dryer, a material-stirring type dryer, and a material-conveying type dryer.

Examples of the material-standing type dryer and the material-transfer type dryer which are of hot air heat-receiving type include a box type dryer, a tunnel dryer, a band dryer, a turbo vertical dryer, a vertical dryer, and a belt dryer.

Examples of the material-stirring type dryer which is of hot air heat-receiving type include a fluidized bed dryer, a draft rotary dryer, a ditch type stirring dryer, and a multistage disk dryer.

Examples of the material-conveying type dryer which is of hot air heat-receiving type include an airflow dryer and a spraying dryer (jet dryer, spray dryer).

Examples of the material-standing type dryer and the material-transfer type dryer which are of conductive heat-receiving type include a vacuum box type dryer, a cylindrical dryer, a vibrating dryer, a vacuum heat treatment dryer, a freeze dryer, and a drum dryer.

Examples of the material-stirring type dryer which is of conductive heat-receiving type include a cylinder type dryer, a ditch type dryer, an inverse-cone type dryer, an extrusion dryer, and a steam heating tube bundle rotation dryer.

Examples of the material-standing type dryer and the material-transfer type dryer which are of radiation heat-receiving type include an infrared dryer and a superheated steam dryer.

Examples of the material-standing type dryer and the material-transfer type dryer which are of high-frequency heat-receiving type include a high-frequency dryer and a microwave dryer.

The heat treatment of the crushed particle may be performed by subjecting the crushed particle to fluidization (stirring or conveying) and heat treatment, or may be performed with the crushed particle being left to still stand. The heat treatment method of the crushed particle is, in particular, preferably a method involving subjecting the crushed particle to fluidization and heat treatment because the heat treatment efficiency is higher. The method involving subjecting the crushed particle to fluidization and heat treatment can be carried out using a material-stirring type dryer or a material-conveying type dryer. The method involving heat treatment with the crushed particle being left to still stand can be carried out using a material-standing type dryer or a material-transfer type dryer.

The heat treatment of the crushed particle may be performed by allowing hot air to act on the crushed particle (hot air heat-receiving type), or bringing the crushed particle into contact with a heat-transfer medium other than hot air. Of these, a method involving bringing the crushed particle into contact with a heat-transfer medium other than hot air is preferable because the heat efficiency is good. The method involving bringing the crushed particle into contact with a heat-transfer medium other than hot air can be carried out using a conductive heat-receiving type dryer.

The crushed particle is subjected to heat treatment and, if desired, cooled, to give a polytetrafluoroethylene particle. The resulting particle can be transferred using gas from a dryer to a device where the next step is to be performed.

When the heat treatment is carried out using hot air, when the crushed particle (polytetrafluoroethylene particle) is transferred by using a gas, or the like, a solid-gas mixture containing the crushed particle (polytetrafluoroethylene particle) and the gas can be formed. The solid-gas mixture formed may be separated into the crushed particle (polytetrafluoroethylene particle) and the gas by using a cyclone or the like, to recover the crushed particle (polytetrafluoroethylene particle).

The resulting polytetrafluoroethylene particle may be further crushed to adjust the particle size of the polytetrafluoroethylene particle.

When the polytetrafluoroethylene particle is further crushed, such crushing may be wet crushing or dry crushing. Examples of the method for crushing the particle include a crushing method with a crusher. Examples of the crusher include impact type crushers such as a hammer mill, a pin mill, a high-speed rotation mill, and a jet mill, and grinding type crushers for crushing due to the shear force generated by a rotary blade and a peripheral stator (stationary knife), such as a cutter mill, a feather mill, and a colloid mill.

The temperature at which the crushing is carried out is preferably -200 to 50°C, more preferably 1°C or higher, more preferably 40°C or lower, and even more preferably 30°C or lower.

The resulting polytetrafluoroethylene particle may be classified by a known method such as airflow classification. The classification can remove any fine particle having a very small particle size and any coarse particle having a very large particle size, to give a polytetrafluoroethylene particle having a desired average particle size or a desired particle size distribution.

The average particle size of the polytetrafluoroethylene particle is preferably 200 µm or less, more preferably 100 µm or less, even more preferably less than 100 µm, yet even more preferably 70 µm or less, particularly preferably 50 µm or less and most preferably 30 µm or less, and is preferably 1 µm or more, more preferably 5 µm or more and even more preferably 10 µm or more. If the average particle size of the polytetrafluoroethylene particle is too large, formability of the polytetrafluoroethylene particle easily deteriorates and forming defects easily occur in a formed article. If the average particle size of the polytetrafluoroethylene particle is too small, handleability tends to be inferior.

The average particle size of the polytetrafluoroethylene particle is a 50% cumulative particle size measured by a laser diffraction method. In the present disclosure, the average particle size of any other particle, for example, the suspension-polymerized particle, is also a 50% cumulative particle size measured by a laser diffraction method.

The content of a high-temperature volatile substance in the polytetrafluoroethylene particle is preferably 0.050% by mass or less, more preferably 0.030% by mass or less and even more preferably 0.020% by mass or less, and is preferably 0.001% by mass or more, more preferably 0.003% by mass or more and even more preferably 0.005% by mass or more, based on the mass of the polytetrafluoroethylene particle.

The content of the high-temperature volatile substance in the polytetrafluoroethylene particle can be determined by measuring the mass of the polytetrafluoroethylene particle heated at 370°C for 2 hours according to JIS K 6891, and performing calculation according to the following expression.

High-temperature volatile substance (% by mass) = [(Mass (g) of polytetrafluoroethylene particle before heating) - (Mass (g) of polytetrafluoroethylene particle after heating)]/(Mass (g) of polytetrafluoroethylene particle before heating) × 100

The standard specific gravity of the polytetrafluoroethylene particle may be 2.130 to 2.280, and is preferably 2.200 or less and more preferably 2.135 or more.

The standard specific gravity of the polytetrafluoroethylene particle can be measured according to ASTM D4894.

The specific surface area of the polytetrafluoroethylene particle is preferably 5.0 m²/g or less, more preferably 4.5 m²/g or less and even more preferably 4.0 m²/g or less, and is preferably 0.1 m²/g or more and more preferably 1.0 m²/g or more.

The specific surface area of the polytetrafluoroethylene particle can be measured according to the BET method, based on JIS Z8830, by using a mixed gas of 30% of nitrogen and 70% of helium, as a carrier gas, and cooling the gas with liquid nitrogen.

The apparent density of the polytetrafluoroethylene particle is preferably 0.55 g/cm³ or less, more preferably 0.50 g/cm³ or less and even more preferably 0.45 g/cm³ or less, and is preferably 0.15 g/cm³ or more, more preferably 0.20 g/cm³ or more and even more preferably 0.25 g/cm³ or more.

The apparent density of the polytetrafluoroethylene particle can be measured according to JIS K 6891.

The polytetrafluoroethylene contained in the polytetrafluoroethylene particle may be a homopolytetrafluoroethylene containing only TFE unit, or may be a modified polytetrafluoroethylene containing TFE unit and a modifying-monomer unit that is based on a modifying monomer copolymerizable with TFE.

Examples of the modifying monomer forming the modifying-monomer unit include a modifying monomer used in the production method of the present disclosure, and the same modifying monomer as that used in the production method of the present disclosure is preferable.

The content of the modifying-monomer unit in polytetrafluoroethylene is preferably 0.001% by mass or more, more preferably 0.01% by mass or more, even more preferably 0.03% by mass or more and particularly preferably 0.05% by mass or more, and is preferably 1.0% by mass or less, more preferably 0.8% by mass or less, even more preferably 0.5% by mass or less and particularly preferably 0.3% by mass or less, based on all polymerization units constituting polytetrafluoroethylene.

In the present disclosure, the content of each of the monomer units constituting polytetrafluoroethylene can be calculated by appropriately combining NMR, FT-IR, elemental analysis, and X-ray fluorescence analysis in accordance with the types of the monomers. The content of each of the monomer units constituting polytetrafluoroethylene can also be determined by calculation from the amount of the modifying monomer added, used in polymerization.

The polytetrafluoroethylene particle in one embodiment contains a fluorine-containing compound.

The polytetrafluoroethylene particle in one embodiment is substantially free from a fluorine-containing compound. The fluorine-containing compound is a compound not added in suspension polymerization, as described above. A typical compound as the fluorine-containing compound is a fluorine-containing compound having a hydrophilic group, having a molecular weight of 1000 or less, preferably 800 g/mol or less.

The polytetrafluoroethylene particle in one embodiment is substantially free from, as the fluorine-containing compound having the hydrophilic group, a compound represented by the following general formula (1):

General formula (1): [X-Rf-A⁻]ᵢMⁱ⁺

wherein X is H, Cl, Br, F, or I; Rf is a linear or branched, partially fluorinated or fully fluorinated aliphatic group, or a linear or branched, partially fluorinated or fully fluorinated aliphatic group interrupted by at least one oxygen atom; A⁻ is an acid group; Mⁱ⁺ is a cation having a valence of i; and i represents an integer of 1 to 3.

The polytetrafluoroethylene particle in one embodiment is substantially free from, as the fluorine-containing compound having the hydrophilic group, a compound represented by the following general formula (2):

General formula (2): [Cₙ₋₁F₂ₙ₋₁COO⁻]M⁺

wherein n is an integer of 9 to 12, and M⁺ represents a cation.

The compound (perfluoroalkanoic acid) represented by general formula (2) is known to be formed during polymerization when perfluoroalkyl vinyl ether or the like is used as a modifying monomer (see International Publication No. WO 2019/161153).

The polytetrafluoroethylene particle in one embodiment is substantially free from, as the fluorine-containing compound having the hydrophilic group, a compound represented by the following general formula (3):

General formula (3): [R¹-O-L-CO₂⁻]M⁺

wherein R¹ represents a linear or branched, partially fluorinated or fully fluorinated aliphatic group, or a linear or branched, partially fluorinated or fully fluorinated aliphatic group interrupted by at least one oxygen atom; L represents a linear or branched non-fluorinated, partially fluorinated or fully fluorinated alkylene group; and M⁺ represents a cation.

The polytetrafluoroethylene particle in one embodiment is substantially free from, as the fluorine-containing compound having the hydrophilic group, a compound represented by general formula (4):

General formula (4): [H-(CF₂)ₘCO₂⁻]M⁺

wherein m represents an integer of 3 to 19, and M⁺ represents a cation.

In the present disclosure, "substantially free from the fluorine-containing compound (fluorine-containing compound having the hydrophilic group)" means that the content of the fluorine-containing compound (fluorine-containing compound generated by polymerizing the monomers) in the polytetrafluoroethylene particle is 1 mass ppm or less based on polytetrafluoroethylene. The content of the fluorine-containing compound (fluorine-containing compound having the hydrophilic group) in the polytetrafluoroethylene particle is preferably 100 mass ppb or less, more preferably 50 mass ppb or less, even more preferably 10 mass ppb or less, even more preferably 5 mass ppb or less and particularly preferably 1 mass ppb or less, and the content of the fluorine-containing surfactant is most preferably less than the detection limit in measurement by liquid chromatography-mass spectrometry (LC/MS).

The content of the fluorine-containing compound (fluorine-containing compound having the hydrophilic group) can be quantified by a known method. For example, the content can be quantified by LC/MS analysis.

First, methanol is added to the polytetrafluoroethylene particle to perform extraction, and the resulting extract is subjected to LC/MS analysis. In order to further improve the extraction efficiency, treatment by Soxhlet extraction, ultrasonic treatment, or the like may be performed.

Molecular weight information is extracted from the resulting LC/MS spectrum to confirm agreement with the structural formula of the candidate fluorine-containing compound (fluorine-containing compound having the hydrophilic group).

Thereafter, aqueous solutions having five or more different content levels of the confirmed fluorine-containing compound (fluorine-containing compound having the hydrophilic group) are prepared, and the LC/MS analysis is carried out on the aqueous solutions with the respective content levels, and the relationship between the content level and the area corresponding to that content level is plotted to draw a calibration curve.

Then, using the calibration curve, the area of the LC/MS chromatogram of the fluorine-containing compound (fluorine-containing compound having the hydrophilic group) in the extract can be converted to the content of the fluorine-containing compound (fluorine-containing compound having the hydrophilic group) .

The polytetrafluoroethylene particle in one embodiment contains a fluorine-containing surfactant. The polytetrafluoroethylene particle in one embodiment contains the fluorine-containing compound and a fluorine-containing surfactant.

The polytetrafluoroethylene particle in one embodiment is substantially free from a fluorine-containing surfactant.

In the present disclosure, "substantially free from a fluorine-containing surfactant" means that the content of the fluorine-containing surfactant in the polytetrafluoroethylene particle is 1 mass ppm or less. The content of the fluorine-containing surfactant in the polytetrafluoroethylene particle is preferably 100 mass ppb or less, more preferably 50 mass ppb or less, even more preferably 10 mass ppb or less, even more preferably 5 mass ppb or less and particularly preferably 1 mass ppb or less, and the content of the fluorine-containing surfactant is most preferably less than the detection limit in measurement by liquid chromatography-mass spectrometry (LC/MS).

The content of the fluorine-containing surfactant can be quantified by a known method. For example, the content can be quantified by LC/MS analysis.

First, methanol is added to the polytetrafluoroethylene particle to perform extraction, and the resulting extract is subjected to LC/MS analysis. In order to further improve the extraction efficiency, treatment by Soxhlet extraction, ultrasonic treatment, or the like may be performed.

Molecular weight information is extracted from the resulting LC/MS spectrum to confirm agreement with the structural formula of the candidate fluorine-containing surfactant.

Thereafter, aqueous solutions having five or more different content levels of the confirmed fluorine-containing surfactant are prepared, and the LC/MS analysis is carried out on the aqueous solutions with the respective content levels, and the relationship between the content level and the area corresponding to that content level is plotted to draw a calibration curve.

Then, using the calibration curve, the area of the LC/MS chromatogram of the fluorine-containing surfactant in the extract can be converted to the content of the fluorine-containing surfactant.

### (Forming)

The present disclosure also relates to a polytetrafluoroethylene particle obtained by the production method. The polytetrafluoroethylene particle obtained by the production method is usually obtained as a powder including a plurality of polytetrafluoroethylene particles.

The polytetrafluoroethylene particle obtained by the production method of the present disclosure can be formed to give a polytetrafluoroethylene formed article. The polytetrafluoroethylene particle obtained by the production method of the present disclosure has a decreased acid odor, and thus the polytetrafluoroethylene particle can be used to significantly improve a working environment during forming.

Examples of the method for forming the polytetrafluoroethylene particle include compression molding, ram extrusion forming, and isobaric compression molding. The forming method is, of these, preferably compression molding. The polytetrafluoroethylene particle is compression molded, thereby providing a polytetrafluoroethylene compression-molded article.

In compression molding, in general, the polytetrafluoroethylene particle is placed in a mold and compressed to prepare a preform, and the resulting preform is loaded in a furnace, sintered, and cooled, thereby providing a compression-molded article.

The compression molding can be performed by, for example, placing the polytetrafluoroethylene particle in a mold, compressing the polytetrafluoroethylene particle at 1 to 100 MPa, and heating and sintering a preform obtained by compression, at 345 to 400°C.

A formed article having a desired shape may be prepared by processing the polytetrafluoroethylene formed article by machining such as cutting. For example, a polytetrafluoroethylene sheet can be obtained by cutting the polytetrafluoroethylene formed article. The resulting polytetrafluoroethylene sheet can be used in lining sheets, packings, gaskets, and diaphragm valves. The resulting polytetrafluoroethylene sheet can also be used in heat-resistant electric wires, heat-resistant insulating tapes for vehicle motors/generators, release sheets, and the like.

The polytetrafluoroethylene formed article can also be used in sealants, casing, sleeves, bellows, hoses, piston rings, butterfly valves, square tanks, wafer carriers, and the like.

The polytetrafluoroethylene particle obtained by the production method of the present disclosure and the polytetrafluoroethylene particle of the present disclosure can also be used in raw materials for granulation, and raw materials for compounds. The polytetrafluoroethylene particle obtained by the production method of the present disclosure and the polytetrafluoroethylene particle of the present disclosure may be granulated by a known granulation method. A filler may be appropriately compounded to the polytetrafluoroethylene particle obtained by the production method of the present disclosure and the polytetrafluoroethylene particle of the present disclosure. Furthermore, a powder for forming, to which a filler is compounded, may be granulated by a known granulation method. The resulting granulated product and material for forming may be formed in the same manner as in the method for forming the polytetrafluoroethylene particle.

While embodiments have been described above, it will be understood that various changes in form and details can be made without departing from the gist and scope of the claims.

### EXAMPLES

Next, embodiments of the present disclosure will now be described by way of Examples, but the present disclosure is not limited only to the Examples.

Various numerical values in the Examples were measured by the following methods.

### <Water content>

The water content was determined by, heating and thus sufficiently drying a crushed particle of polytetrafluoroethylene at 150°C for 3 hours, measuring the mass of the crushed particle before and after heating, and performing calculation according to the following expression. Water content (% by mass) = [(Mass (g) of crushed particle before heating) - (Mass (g) of crushed particle after heating]/(Mass (g) of crushed particle after heating) × 100

### <Average particle size (50% cumulative particle size)>

The average particle size was determined by the following laser diffraction method. The method was performed in a dry manner by using HELOS & RODOS system (trade name, manufactured by Sympatec GmbH). The shade of a measurement powder dispersed by compressed air at a dispersion pressure of 2 bar was reflected by laser and detected by a measurement sensor portion, thereby computing the particle size distribution of the measurement powder, and thus the value of the average particle size (50% cumulative particle size) d50 was determined on a volume basis. The d50 was equal to the particle size corresponding to 50% in cumulative particle size distribution accumulation.

### <Hydrogen fluoride concentration>

10 kg of the polytetrafluoroethylene particle was added to a plastic bag made of PET, having a volume of 60 L, and left to still stand at room temperature in a cold dark place for 10 days. The gas in the bag was suctioned by using a hydrogen fluoride detector tube, according to the method recommended by the manufacturer, and the hydrogen fluoride concentration in the bag was determined from an indicated value. The detection limit was 0.05 mass ppm.

### <Standard specific gravity (SSG)>

Using a sample formed in accordance with ASTM D4894, the SSG was measured by the water replacement method in accordance with ASTM D792.

### <Specific surface area>

The specific surface area of the polytetrafluoroethylene particle was measured according to the BET method (flow method, one-point method), based on JIS Z8830, by using a mixed gas of 30% of nitrogen and 70% of helium, as a carrier gas, and cooling the gas with liquid nitrogen. The equipment here used was Macsorb HM Model-1210.

### <Content of perfluoro(propyl vinyl ether) (PPVE)>

The content of PPVE in polytetrafluoroethylene was determined by press-forming the polytetrafluoroethylene particle to produce a thin film, subjecting the thin film disk to FT-IR measurement to provide the infrared absorbance, and multiplying the ratio of absorbance at 995 cm⁻¹/absorbance at 935 cm⁻¹ by 0.14.

### <Measurement of fluorine-containing compound having hydrophilic group>

### [Method for measuring content of compound represented by general formula (2)]

### Extraction from polytetrafluoroethylene particle

10 mL of methanol was added to 0.30 g of the polytetrafluoroethylene particle, ultrasonic treatment was performed with warming to 60°C for 120 minutes, and a supernatant including a compound represented by general formula (2) was extracted.

General formula (2): [Cₙ₋₁F₂ₙ₋₁COO⁻]M⁺

(wherein n represents an integer of 9 to 12 and M⁺ represents a cation.)

### Measurement of content of compound represented by general formula (2), contained in extract Calibration curve

Five concentration levels of methanol standard solutions of perfluorononanoic acid (PFNA), perfluorodecanoic acid (PFDA), perfluoroundecanoic acid (PFUnDA), and perfluorododecanoic acid (PFDoDA) having known concentrations were prepared in each of concentration ranges of 0.03 to 0.5 ng/mL, 0.5 to 5 ng/mL, and 5 to 50 ng/mL, and measurement was made using a liquid chromatograph-mass spectrometer. First-order approximation was used to create calibration curves from the sample concentrations and peak integral values thereof. The lower limit of quantification was 1 ppb/polymer.

### Measuring instrument configuration and LC-MS measurement conditions

### [Table 1]

**Table 1**

| LC unit | | | | | |
|---|---|---|---|---|---|
| | Equipment | 1260HPLC manufactured by Agilent Technologies | | | |
| | Column | GL Sciences Inc. InertSustaion C18 2.1×150 mm 3 µm | | | |
| | Mobile phase | A | CH₃CN | | |
| | | B | Aqueous 0.5 mM ammonium acetate solution containing 0.1% formic acid | | |
| | | | | 0→1 min | A:B=25:75 |
| | | | | 1→26 min | A:B=25:75 → A:B=100:0 |
| | | | | 26→35 min | A:B=100:0 |
| | | | | 35→40 min | A:B--25:75 |
| | Flow rate | | | 0.2 mL/min | |
| | Column temperature | 40°C | | | |
| | Sample injection amount | 5 µL | | | |

| MS unit | | | | | |
|---|---|---|---|---|---|
| | Equipment | QTRAP5500 manufactured by Sciex | | | |
| | Measurement mode | SRM | | | |
| | Ionization method | Electrospray ionization | | | |
| | | Negative mode | | | |

### [Table 2]

**Table 2**

| Compound | Precursor | Product |
|---|---|---|
| [C₈F₁₇COO⁻]M⁺ | 463 | 419 |
| [C₉F₁₉COO⁻]M⁺ | 513 | 469 |
| [C₁₀F₂₁COO]M⁺ | 563 | 519 |
| [C₁₁F₂₃COO⁻]M⁺ | 613 | 569 |

### Content of compound represented by general formula (2), contained in extract

The compound represented by general formula (2) was measured using a liquid chromatograph-mass spectrometer. Concerning the liquid phase extracted, the peak area of the compound represented by general formula (2) with respect to each number of carbon atoms was determined by an SRM method, and the content of the compound represented by general formula (2) contained in the polytetrafluoroethylene particle was determined.

### Production Example 1

Polymerization of tetrafluoroethylene was performed by the method described in Production Example 3 of International Publication No. WO 2003/035724. In the polymerization, the amount of PPVE was 85 g, and no surfactant was used. The resulting suspension-polymerized particle of polytetrafluoroethylene was taken out and washed with pure water twice, and washed and simultaneously crushed by a high-speed rotation mill, to an average particle size of 350 µm, thereby providing a crushed particle. The resulting crushed particle was dehydrated by a vibrating dehydrate, to a water content of 5% by mass, thereby providing a dehydrated crushed particle. Then, a solid-gas mixture containing the crushed particle and gas was formed, then airflow dried under temperature adjustment so that the temperature measured at an exhaust port of hot air was 130°C, and separated into the crushed particle and the gas, thereby providing a crushed particle dried. The average particle size of the resulting crushed particle was 350 µm.

### Example 1

A solid-gas mixture containing the crushed particle obtained in Production Example 1 and gas was formed, and then crushed by an air jet mill and separated into the crushed particle and the gas, thereby providing a polytetrafluoroethylene particle. The average particle size of the resulting polytetrafluoroethylene particle was 26 µm. An acid odor was felt and the hydrogen fluoride concentration was 4.8 mass ppm. The standard specific gravity was 2.171. The specific surface area was 3.5 m²/g. The content of PPVE in polytetrafluoroethylene was 0.062% by mass.

### Example 2

The crushed particle obtained in Production Example 1 was fed to a vibrating dryer as a material-conveying type dryer which was of conductive heat-receiving type, and heat treatment at 250°C for 12 minutes was performed. Then, a solid-gas mixture containing the crushed particle and gas was formed, and then crushed by an air jet mill and separated into the crushed particle and the gas, thereby providing a polytetrafluoroethylene particle. The average particle size of the resulting polytetrafluoroethylene particle was 30 µm. No acid odor was felt. The hydrogen fluoride concentration was 1.0 mass ppm. The standard specific gravity was 2.171. The specific surface area was 3.4 m²/g.

### Example 3

The crushed particle obtained in Production Example 1 was fed to an inverse-cone type dryer as a material-stirring type dryer which was of conductive heat-receiving type, and heat treatment at 250°C for 6 hours was performed. Then, a solid-gas mixture containing the crushed particle and gas was formed, and then crushed by a feather mill and separated into the crushed particle and the gas, thereby providing a polytetrafluoroethylene particle. The average particle size of the resulting polytetrafluoroethylene particle was 29 µm. No acid odor was felt and the hydrogen fluoride concentration was 0.3 mass ppm. The standard specific gravity was 2.171. The specific surface area was 3.7 m²/g.

### Example 4

The crushed particle obtained in Production Example 1 was fed to a fluidized bed dryer as a material-stirring type dryer which was of hot air heat-receiving type, and heat treatment at 250°C for 1.5 hours was performed. Then, a solid-gas mixture containing the crushed particle and gas was formed, and then crushed by an air jet mill and separated into the crushed particle and the gas, thereby providing a polytetrafluoroethylene particle. The average particle size of the resulting polytetrafluoroethylene particle was 26 µm. No acid odor was felt and the hydrogen fluoride concentration was 0.5 mass ppm. The standard specific gravity was 2.171. The specific surface area was 3.7 m²/g.

### Example 5

Polymerization of tetrafluoroethylene was performed by the method described in Production Example 3 of International Publication No. WO 2003/035724. In the polymerization, the amount of PPVE was 85 g, and no surfactant was used. The resulting suspension-polymerized particle of polytetrafluoroethylene was taken out, washed and simultaneously crushed by a high-speed rotation mill and furthermore crushed by a colloid mill, to an average particle size of 300 µm, thereby providing a crushed particle. The resulting crushed particle was dehydrated by vibrating dehydration to a water content of 5% by mass, thereby providing a dehydrated crushed particle. The crushed particle was fed to a vibrating dryer as a material-conveying type dryer which was of conductive heat-receiving type, and heat treatment at 250°C for 15 minutes was performed. Then, a solid-gas mixture containing the crushed particle and gas was formed, and then crushed by an air jet mill and separated into the crushed particle and the gas, thereby providing a polytetrafluoroethylene particle. The average particle size of the resulting polytetrafluoroethylene particle was 21 µm. No acid odor was felt. The hydrogen fluoride concentration was 0 mass ppm. The standard specific gravity was 2.171. The specific surface area was 3.6 m²/g. The content of PPVE in polytetrafluoroethylene was 0.062% by mass.

### Example 6

The crushed particle obtained in Production Example 1 was fed to a vibrating dryer as a material-conveying type dryer which was of conductive heat-receiving type, and heat treatment at 260°C for 10 minutes was performed. Here, hot air at 260°C was entrained. Then, a solid-gas mixture containing the crushed particle and gas was formed, and then crushed by an air jet mill and separated into the crushed particle and the gas, thereby providing a polytetrafluoroethylene particle. The average particle size of the resulting polytetrafluoroethylene particle was 23 µm. No acid odor was felt. The Hydrogen fluoride concentration was 0.3 mass ppm. The standard specific gravity was 2.171. The specific surface area was 3.4 m²/g.

The content of the comound represented by general formula (2) is shown in Table 3.

**Table 3**

| General formula (2): [Cₙ₋₁F₂ₙ₋₁COO⁻]M⁺ | | | | | | |
|---|---|---|---|---|---|---|
| | Example 1 | Example 2 | Example 3 | Example 4 | Example 5 | Example 6 |
| n | ppb/polymer | ppb/polymer | ppb/polymer | ppb/polymer | ppb/polymer | ppb/polymer |
| 9 | 24 | 6 | 3 | 6 | 6 | 3 |
| 10 | 6 | 1 | 1 | 1 | 1 | 1 |
| 11 | 31 | 7 | 3 | 4 | 7 | 2 |
| 12 | 5 | 1 | 1 | 1 | 1 | 1 |
| total | 66 | 15 | 8 | 12 | 15 | 7 |

## Claims

1. A method for producing a polytetrafluoroethylene particle, comprising:
subjecting tetrafluoroethylene to suspension polymerization in an aqueous medium to prepare a suspension-polymerized particle of a polytetrafluoroethylene;
washing and then crushing the suspension-polymerized particle or crushing the suspension-polymerized particle with washing to prepare a crushed particle;
dehydrating the crushed particle to prepare a crushed particle having a water content of 40% by mass or less; and
subjecting the dehydrated crushed particle to heat treatment to produce a polytetrafluoroethylene particle.

2. The production method according to claim 1, the method comprising, after dehydrating the crushed particle, further drying the crushed particle.

3. The production method according to claim 2, wherein the crushed particle is dried by airflow drying.

4. The production method according to any one of claims 1 to 3, wherein a temperature of the heat treatment is 200°C or higher.

5. The production method according to any one of claims 1 to 4, wherein the heat treatment is performed using a conductive heat-receiving type dryer.

6. The production method according to any one of claims 1 to 4, wherein the heat treatment is performed using a material-stirring type dryer or a material-conveying type dryer.

7. The production method according to any one of claims 1 to 6, the method comprising, in the heat treatment or during transferring of the polytetrafluoroethylene particle after the heat treatment, forming a solid-gas mixture containing the polytetrafluoroethylene particle generated by the heat treatment and gas, separating the solid-gas mixture into the polytetrafluoroethylene particle and the gas, and recovering the polytetrafluoroethylene particle to produce the polytetrafluoroethylene particle.

8. The production method according to any one of claims 1 to 7, wherein an average particle size of the crushed particle is 100 to 800 µm.

9. The production method according to any one of claims 1 to 8, the method comprising, after subjecting the crushed particle to the heat treatment to produce the polytetrafluoroethylene particle, further crushing the polytetrafluoroethylene particle to produce a polytetrafluoroethylene particle having an average particle size of 200 µm or less.

10. The production method according to any one of claims 1 to 9, wherein tetrafluoroethylene and a modifying monomer are subjected to suspension polymerization.

11. The production method according to any one of claims 1 to 10, wherein a standard specific gravity of the polytetrafluoroethylene particle is 2.200 or less.

12. The production method according to any one of claims 1 to 11, wherein a specific surface area of the polytetrafluoroethylene particle is 5.0 m²/g or less.

13. The production method according to any one of claims 1 to 12, wherein the polytetrafluoroethylene particle is substantially free from a compound represented by the following general formula (2):
General formula (2): [Cₙ₋₁F₂ₙ₋₁COO⁻]M⁺
wherein n represents an integer of 9 to 12 and M⁺ represents a cation.

14. The production method according to any one of claims 1 to 13, wherein suspension polymerization is carried out in the presence or absence of a surfactant, and an amount of the surfactant is 2000 mass ppm or less based on the aqueous medium.

15. A method for producing a polytetrafluoroethylene formed article, the method comprising producing the polytetrafluoroethylene particle by the production method according to any one of claims 1 to 14, and then forming the polytetrafluoroethylene particle to give a formed article.

16. A method for producing a polytetrafluoroethylene compression-molded article, the method comprising producing the polytetrafluoroethylene particle by the production method according to any one of claims 1 to 14, and then compression molding the polytetrafluoroethylene particle to give a compression-molded article.

17. A polytetrafluoroethylene particle obtained by the production method according to any one of claims 1 to 14.
